# FASCICULE DE BREVET EUROPEEN

(11) **EP 0 772 980 B1**
(45) Date de publication et mention de la délivrance du brevet: **06.06.2001**
(21) Numéro de dépôt: 95810696.5
(22) Date de dépôt: 07.11.1995
(51) Int. Cl.: A23L 1/105

(54) **Produit amylacé traité par voie enzymatique**
Enzymbehandeltes stärkehaltiges Produkt
Enzyme treated amylaceous product

(43) Date de publication de la demande: 14.05.1997
(73) Titulaire: SOCIETE DES PRODUITS NESTLE S.A., 1800 Vevey (CH)
(72) Inventeur: Desjardins, Jean-Jacques, CH-1026 Denges (CH); Duby, Philippe, CH-1008 Prilly (CH); Dupart, Pierre, CH-8405 Winterthur (CH); Wood, Robert Dustan, CH-1004 Lausanne (CH); Zurcher, Ulrich, CH-1400 Yverdon (CH)
(74) Mandataire: Wavre, Claude-Alain

(56) Documents cités:
- GB-A- 1 442 149
- US-A- 3 950 543
- US-A- 4 710 386
- PATENT ABSTRACTS OF JAPAN vol. 18, no. 619 (C-1278) 25 Novembre 1994 & JP-A-06 237 721 (NISSHIN FLOUR MILLING CO. LTD.) 30 Aoüt 1994

## Description

La présente invention a pour objet un procédé de préparation d'une base aromatique, ainsi que son utilisation pour la fabrication de produits alimentaires.

L'utilisation d'arômes ou de sirops d'enrobage pour renforcer le goût de grain cuit et/ou le goût biscuité et/ou le goût toasté est connu depuis longtemps dans la préparation de produits alimentaires, notamment dans la fabrication de céréales pour petit-déjeuner et de desserts. Mais souvent, ces arômes ou ces sirops ne permettent pas de reproduire le goût de fond caractéristique de ces produits alimentaires obtenus par un procédé traditionnel.

CA 2004149 décrit notamment un procédé de préparation de céréales cuites pour petit-déjeuner, dans lequel on prépare un mélange à base d'une matière première amylacée présentant une teneur en eau de 14-22% en poids puis on cuit-extrude le mélange. Le produit cuit-extrudé et expensé ainsi obtenu peut alors être séché, puis broyé et aggloméré de manière à obtenir des granulés susceptibles d'être aisément dissouts dans un liquide.

Selon EP 0606505, un autre procédé de préparation de céréales pour petit-déjeuner connu consiste à préparer une composition comprenant notamment une matière première amylacée et du sucre et à cuire-extruder cette composition avec une quantité adéquate d'eau de manière à obtenir des céréales expansées de densité voulue. On peut ensuite enrober ces morceaux de céréales avec un sirop puis les sécher.

Mais de tels procédés, bien qu'ils présentent l'avantage d'être rapides, ne permettent pas d'obtenir des céréales cuites au goût de grain cuit et/ou au goût biscuité et/ou au goût toasté car le temps de cuisson, qui est généralement de l'ordre de la minute, est de trop faible importance.

La présente invention a pour but de proposer un procédé de préparation d'une base aromatique au goût de grain cuit et/ou goût toasté et/ou goût biscuité.

A cet effet, dans le procédé de préparation d'une base aromatique selon la présente invention:
- on prépare un mélange comprenant au moins de l'eau et une matière première amylacée,
- on le liquéfie avec au moins une carbohydrase,
- puis on le traite enzymatiquement avec une lipase ou une lipoxygénase.

On a constaté, avec surprise, qu'un tel procédé qui a l'avantage d'être rapide permet effectivement d'obtenir une base aromatique au goût du grain cuit et/ou au goût toasté et/ou au goût biscuité.

Dans la suite de la description, on emploiera l'expression "matière première amylacée" pour désigner une farine ou une semoule de céréales, notamment de blé dur, de blé tendre, de riz, d'orge ou de maïs.

Pour mettre en oeuvre le présent procédé, on prépare donc un mélange comprenant au moins de l'eau et une matière première amylacée. On peut préparer un mélange comprenant 50-70% d'eau, 25-50% de matière première amylacée et 0-5% d'huile végétale, par exemple.

On le liquéfie, de manière à réduire sa viscosité, avec au moins une carbohydrase. On peut le liquéfier avec 0,2-0,5% d'alpha-amylase, notamment avec celle commercialisée sous la dénomination Dexlo P par Gist-Brocades N.V., Food Ingredient division, P.B. 01, NL-260 MA DELFT, à 50-85° C pendant 70-90 min, par exemple. De préférence, on utilise une alpha-amylase dont l'activité enzymatique est de 170000 Unités Amylase par gramme. On mesure cette activité enzymatique sur un amidon modifié par fixation d'un colorant qui, en se libérant, colore la solution dont l'intensité devient mesurable.

Puis on le traite enzymatiquement de préférence avec une lipase ou une lipoxygénase, de manière à favoriser la formation de composés aromatiques donnant un goût de fond caractéristique.

On peut le traiter enzymatiquement avec 0,5-1,5% de lipoxygénase, notamment celle extraite de la farine de petit pois commercialisée par Fluka A.G., Chemische Fabrik, CH-9470 BUCHS St GALL, à 40-60° C pendant 80-100 min, de manière à oxyder les acides gras polyinsaturés en hydroxypéroxydes, molécules instables, formant des composés aromatiques, par exemple. De préférence, on utilise une lipoxygénase dont l'activité enzymatique est de 135000 Unités Lipoxygénase par gramme. On mesure cette activité enzymatique par mesure de l'oxydation de l'acide linoléique par la lipoxygénase sous lumière UV.

On peut également le traiter enzymatiquement avec 0,05-0,2% de lipase, notamment celle commercialisée par Novo Ferment A.G., Neumatt, CH-4243 DITTINGEN, à 45-65° C pendant 110-130 min, de manière à faciliter l'oxydation des acides gras et la formation de composés aromatiques, du fait de l'hydrolyse des lipides en acides gras, par exemple. De préférence, on utilise une lipase présentant une activité enzymatique de 184000 Unités Lipase par gramme. On mesure cette activité enzymatique par mesure de l'intensité fluorescente d'une fraction spécifique liée à l'acide heptanoïque.

Dans un premier mode de réalisation préféré du présent procédé, on sèche le mélange après le traitement enzymatique et après une éventuelle brève inactivation des enzymes à la vapeur, par exemple. On peut notamment le sécher sur cylindre. Pour ce faire, on forme un film de matière liquide ou pâteuse à sécher sur au moins un cylindre chauffé, on détache le film séché du cylindre et on le réduit alors en flocons. La base aromatique séchée ainsi réalisée peut être directement utilisée pour la fabrication d'un produit alimentaire ou elle peut être conditionnée et conservée pour un usage ultérieur, par exemple.

Dans un second mode de réalisation préféré du présent procédé, on traite thermiquement le mélange à 90-120° C pendant 10-30 min après l'étape de traitement enzymatique, de manière à le stabiliser et à inactiver les enzymes. On obtient ainsi une base aromatique liquide que l'on peut utiliser directement pour la fabrication d'un produit alimentaire ou que l'on peut conditionner et conserver pour un usage ultérieur, par exemple.

La présente invention a également pour objet l'utilisation de la base aromatique obtenue selon le présent procédé pour la fabrication d'un produit alimentaire. On peut notamment l'utiliser pour la fabrication de desserts instantanés et de soupes, par exemple. De même, on peut l'utiliser dans une composition alimentaire déstinée à l'alimentation infantile, par exemple.

De préférence, on utilise la base aromatique pour la fabrication de céréales prêtes à consommer. Pour ce faire, on incorpore de préférence la base aromatique à une composition comprenant 8-15% d'eau et, en % en poids de matière sèche, 70-90% de matière première amylacée, 2-20% de sucre, 1-5% d'huile de palme hydrogénée, 2-4% d'extrait de malt, 2-3% de sel et 0-1% de carbonnate de calcium que l'on peut cuire-extruder à 150-190° C pendant 20-60 s, par exemple. Si la base aromatique est séchée, on peut l'incorporer à ladite composition, à raison de 10-80% de base séchée pour 20-90% de composition.
Par contre, si la base aromatique est liquide, on peut l'incorporer à ladite composition, à raison de 5-25% de base liquide pour 75-95% de composition.
Pour la cuisson-extrusion, on peut utiliser un cuiseur-extrudeur bi-vis, par exemple.

Le procédé de préparation d'une base aromatique selon la présente invention ainsi que son utilisation pour la fabrication de produits alimentaires sont décrits plus en détails dans les exemples ci-après. Dans ces exemples, les pourcentages et parties sont donnés en poids, sauf indications contraires.

### Exemple 1

On prépare un mélange comprenant 700 g de farine de maïs et 1300 g d'eau que l'on liquéfie avec 0,3% d'alpha-amylase à 60° C pendant 80 min.

Puis, on abaisse la température à 50° C et l'on traite enzymatiquement le mélange avec 1% de lipoxygénase pendant 90 min.

De manière à inactiver les enzymes et à stabiliser le mélange, on traite thermiquement le mélange sous agitation pendant 20 min à 110° C.

On obtient ainsi une base aromatique liquide au goût de grain cuit et au goût toasté.

### Exemple 2

On procède de la manière décrite à l'exemple 1, à l'exception du fait que l'on réalise le traitement enzymatique avec 0,1% de lipase à 55° C pendant 100 min.

On obtient ainsi une base aromatique liquide au goût de grain cuit et au goût biscuité.

### Exemple 3

On prépare un mélange comprenant 49% de semoule de maïs, 50% d'eau et 1% d'huile de maïs. On le liquéfie avec 0,3% d'alpha-amylase à 70° C pendant 90 min.

Puis on abaisse la température à 50° C et l'on traite le mélange enzymatiquement avec 1% de lipoxygénase pendant 90 min.

On inactive les enzymes par injection de vapeur à 140° C pendant 15 s. On sèche ensuite le mélange sur cylindre. Pour ce faire, on dépose le mélange sous forme d'un film sur un cylindre chauffé avec de la vapeur saturée à 110 kPa et tournant à 4,2 rpm. On détache le film du cylindre et on le réduit en flocons.

On obtient ainsi une base aromatique séchée au goût toasté et au goût biscuité très prononcés.

### Exemple 4

On prépare un mélange comprenant 37,5% de farine d'orge, 60,6% d'eau et 1,9% d'huile de maïs. On le liquéfie avec 0,45% d'alpha-amylase à 85° C pendant 60 min.

Puis on abaisse la température à 45° C et l'on traite le mélange enzymatiquement avec 1,5% de lipoxygénase pendant 60 min.

On inactive les enzymes par injection de vapeur à 140° C pendant 15 s. On sèche ensuite le mélange sur cylindre. Pour ce faire, on dépose le mélange sous forme d'un film sur un cylindre chauffé à vapeur saturée à 110 kPa et tournant à 4,2 rpm. On détache le film du cylindre et on le réduit en flocons.

On obtient ainsi une base aromatique séchée au goût d'orge, au goût biscuité et au goût toasté.

### Exemple 5

On procède de la manière décrite à l'exemple 4, à l'exception du fait que l'on prépare un mélange comprenant 37,5% de farine de riz, 60,6% d'eau et 1,9% d'huile de maïs.

On obtient ainsi une base aromatique séchée au goût de grain cuit et au goût légèrement biscuité.

### Exemple 6

On procède de la manière décrite à l'exemple 4, à l'exception du fait que l'on prépare un mélange comprenant 37,5% de farine de blé entier, 60,6% d'eau et 1,9% d'huile de maïs.

On obtient ainsi une base aromatique séchée au goût de grain cuit et au goût légèrement biscuité.

### Exemple 7

On utilise la base aromatique telle qu'obtenue à l'exemple 1, pour la fabrication de céréales prêtes à consommer.

Pour ce faire, on prépare une composition comprenant 10% d'eau et, en % en poids de matière sèche, 86% de semoule de maïs, 7,2% de sucre, 2,8% d'extrait de malt, 1,7% de sel, 1,8% d'huile de palme hydrogénée et 0,5% de carbonate de calcium.

On incorpore à cette composition 18% de base aromatique, en % en poids de matière sèche, lors d'une cuisson-extrusion que l'on réalise dans un cuiseur-extrudeur bi-vis à 165° C pendant 40 s.

On obtient ainsi des céréales prêtes à consommer présentant un goût de grain cuit et un goût toasté.

### Exemple 8

On utilise la base aromatique telle qu'obtenue à l'exemple 2 et l'on procède de la manière décrite à l'exemple 7, pour la fabrication de céréales prêtes à consommer.

On obtient ainsi des céréales prêtes à consommer présentant un goût de grain cuit et un goût biscuité.

### Exemple 9

On utilise la base aromatique telle qu'obtenue à l'exemple 3 et l'on procède de la manière décrite à l'exemple 7 à l'exception du fait que l'on incorpore 25% de la base aromatique à la composition lors de la cuisson-extrusion, pour la fabrication de céréales prêtes à consommer.

On obtient ainsi des céréales prêtes à consommer présentant un goût de grain cuit et un goût toasté.

### Exemple 10

On utilise la base aromatique telle qu'obtenue à l'exemple 4 et l'on procède de la manière décrite à l'exemple 7 à l'exception du fait que l'on incorpore 25% de la base aromatique à la composition lors de la cuisson-extrusion, pour la fabrication de céréales prêtes à consommer.

On obtient ainsi des céréales prêtes à consommer présentant un goût biscuité et un goût toasté.

### Exemple 11

On utilise la base aromatique telle qu'obtenue à l'exemple 3, pour la fabrication d'une soupe de volaille.

Pour ce faire, on prépare un mélange comprenant 0,01 partie d'antioxydants, 1 partie de sel, 6 parties d'huile de palme hydrogénée, 2 parties de graisse de poule, 2,5 parties d'arôme de poulet, 2 parties de viande de poulet déshydratée, 25,8 parties de maltodextrine, 1 partie de sodium mono-glutamate, de manière à renforcer le goût et 2,6 parties de substances aromatiques, notamment du celeri, du poivre, des oignons et de l'ail.

A ce mélange, on incorpore 57 parties de base aromatique séchée.

On obtient ainsi une soupe de volaille en poudre que le consommateur peut reconstituer à chaud en mélangeant 25% de ladite poudre à 75% d'eau à 90° C, de manière à obtenir une soupe de volaille onctueuse.

### Exemple 12

On utilise les bases aromatiques telles qu'obtenues aux exemples 3, 4, 5 et 6, pour la préparation d'une crème dessert.

Pour ce faire, on prépare un mélange comprenant 5,7 parties de protéines de lait, 15,5 parties de graisses végétales, 0,2 partie de gomme xanthane, 1,1 parties d'arôme vanille, 12 parties de sucre semoule et 37,5 parties de farine de riz préalablemment séchée sur cylindre.

On ajoute à ce mélange 7 parties de chacune des bases aromatiques obtenues aux exemples 3, 4, 5 et 6.

On obtient ainsi une composition alimentaire en poudre que le consommateur peut reconstituer en mélangeant à froid 25% de ladite composition à 75% de lait entier, de manière à obtenir une crème dessert onctueuse au goût de vanille.

## Revendications

1. Procédé de préparation d'une base aromatique, dans lequel:
- on prépare un mélange comprenant au moins de l'eau et une matière première amylacée,
- on le liquéfie avec au moins une carbohydrase,
- puis on le traite enzymatiquement avec une lipase ou une lipoxygénase.

2. Procédé selon la revendication 1, dans lequel on prépare un mélange comprenant 50-70% d'eau, 25-50% de matière première amylacée et 0-5% d'huile végétale.

3. Procédé selon la revendication 1, dans lequel on liquéfie le mélange avec 0,2-0,5% d'alpha-amylase à 50-85° C pendant 70-90 min.

4. Procédé selon la revendication 1, dans lequel on traite enzymatiquement le mélange avec 0,5-1,5% de lipoxygénase à 40-60° C pendant 80-100 min.

5. Procédé selon la revendication 1, dans lequel on traite enzymatiquement le mélange avec 0,05-0,2% de lipase à 45-65° C pendant 110-130 min.

6. Procédé selon la revendication 1, dans lequel on sèche le mélange après l'étape de traitement enzymatique.

7. Procédé selon la revendication 1, dans lequel on traite thermiquement le mélange à 90-120° C pendant 10-30 min après l'étape de traitement enzymatique.

8. Utilisation de la base aromatique obtenue selon l'une des revendications 1-7 pour la fabrication d'un produit alimentaire.

9. Utilisation selon la revendication 8, pour la fabrication de céréales prêtes à consommer, dans laquelle on incorpore la base aromatique à une composition comprenant 8-15% d'eau et, en % en poids de matière sèche, 70-90% de matière première amylacée, 2-20% de sucre, 1-5% d'huile de palme hydrogénée, 2-4% d'extrait de malt, 2-3% de sel et 0-1% de carbonnate de calcium, et l'on cuit-extrude la composition.

10. Utilisation selon la revendication 9, dans laquelle on incorpore la base aromatique séchée à ladite composition, à raison de 10-80% de base séchée pour 20-90% de composition.

11. Utilisation selon la revendication 9, dans laquelle on incorpore la base aromatique liquide à ladite composition, à raison de 5-25% de base liquide pour 75-95% de composition.

12. Utilisation selon la revendication 9, dans laquelle on cuit-extrude à 150-190° C pendant 20-60 s.

## Patentansprüche

1. Verfahren zur Herstellung einer Aromagrundlage, bei dem man
- eine Mischung herstellt, die mindestens Wasser und ein stärkehaltiges Grundmaterial enthält,
- sie mit mindestens einer Carbohydrase verflüssigt
- und sie dann mit einer Lipase oder einer Lipoxygenase enzymatisch behandelt.

2. Verfahren nach Anspruch 1, bei dem man eine Mischung herstellt, die 50-70% Wasser, 25-50% stärkehaltiges Grundmaterial und 0-5% pflanzliches Ö1 enthält.

3. Verfahren nach Anspruch 1, bei dem man die Mischung 70-90 min bei 50-85°C mit 0,2-0,5% α-Amylase verflüssigt.

4. Verfahren nach Anspruch 1, bei dem man die Mischung 80-100 min bei 40-60°C mit 0,5-1,5% Lipoxygenase enzymatisch behandelt.

5. Verfahren nach Anspruch 1, bei dem man die Mischung 110-130 min bei 45-65°C mit 0,05-0,2% Lipase enzymatisch behandelt.

6. Verfahren nach Anspruch 1, bei dem man die Mischung nach dem Schritt der Enzymbehandlung trocknet.

7. Verfahren nach Anspruch 1, bei dem man die Mischung nach dem Schritt der Enzymbehandlung 10-30 min bei 90-120°C wärmebehandelt.

8. Verwendung der Aromagrundlage nach einem der Ansprüche 1 bis 7 für die Herstellung eines Nahrungsmittelprodukts.

9. Verwendung nach Anspruch 8 für die Herstellung von Fertigcerealien, bei der man die Aromagrundlage in eine Zusammensetzung einarbeitet, die 8-15% Wasser und, in Gew.-% der Trockenmasse, 70-90% stärkehaltiges Grundmaterial, 2-20% Zucker, 1-5% hydriertes Palmöl, 2-4% Malzextrakt, 2-3% Salz und 0-1% Calciumcarbonat enthält, und die Zusammensetzung kochextrudiert.

10. Verwendung nach Anspruch 9, bei der man die getrocknete Aromagrundlage in die Zusammensetzung in einer Menge von 10-80% getrocknete Grundlage auf 20-90% Zusammensetzung einarbeitet.

11. Verwendung nach Anspruch 9, bei der man die flüssige Aromagrundlage in die Zusammensetzung in einer Menge von 5-25% flüssige Grundlage auf 75-95% Zusammensetzung einarbeitet.

12. Verwendung nach Anspruch 9, bei der man 20-60 s bei 150-190°C kochextrudiert.

## Claims

1. Method for preparing a flavouring base, wherein:
- a mixture is prepared comprising at least water and a starchy raw material,
- it is liquefied with at least one carbohydrase,
- it is then treated enzymatically with a lipase or a lipoxygenase.

2. Method according to claim 1, wherein a mixture is prepared comprising 50-70 % water, 25-50 % starchy raw material and 0-5 % vegetable oil.

3. Method according to claim 1, wherein the mixture is liquefied with 0.2-0.5 % alpha-amylase at 50-85°C for 70-90 min.

4. Method according to claim 1, wherein the mixture is treated enzymatically with 0.5-1.5 % lipoxygenase at 40-60°C for 80-100 min.

5. Method according to claim 1, wherein the mixture is treated enzymatically with 0.05-0.2 % lipase at 45-65°C for 110-130 min.

6. Method according to claim 1, wherein the mixture is dried after the enzymatic treatment step.

7. Method according to claim 1, wherein the mixture is heat-treated at 90-120°C for 10-30 min after the enzymatic treatment step.

8. Use of the flavouring base obtained according to one of claims 1-7 for the manufacture of a food product.

9. Use according to claim 8 for the manufacture of ready-to-eat cereals, wherein the flavouring base is incorporated in a composition comprising 8-15 % water and, in % by weight of dry matter, 70-90 % starchy raw material, 2-20 % sugar, 1-5 % hydrogenated palm oil, 2-4 % malt extract, 2-3 % salt and 0-1 % calcium carbonate, and the composition is extrusion-cooked.

10. Use according to claim 9 wherein the dried flavouring base is incorporated in the said composition at a rate of 10-80 % of dried base per 20-90 % of composition.

11. Use according to claim 9 wherein the liquid flavouring base is incorporated in the said composition at a rate of 5-25 % of liquid base per 75-95 % of composition.

12. Use according to claim 9 wherein extrusion-cooking is carried out at 150-190°C for 20-60 s.
